# EUROPEAN PATENT SPECIFICATION

(11) **EP 3 381 742 B1**
(45) Date of publication and mention of the grant of the patent: **22.12.2021**
(21) Application number: 17189881.0
(22) Date of filing: 07.09.2017
(51) Int. Cl.: B60N 2/00

(54) **SEATING SENSOR**
SITZSENSOR
CAPTEUR DE SIÈGE

(30) Priority: 28.03.2017 JP 2017063608
(43) Date of publication of application: 03.10.2018
(73) Proprietor: AISIN SEIKI KABUSHIKI KAISHA, Kariya-shi Aichi 448-8650 (JP)
(72) Inventor: KITO, Kosuke, Kariya-shi, Aichi 448-8650 (JP); NAKAYAMA, Koichi, Kariya-shi, Aichi 448-8650 (JP); AOYAMA, Mutsuro, Kariya-shi, Aichi 448-8650 (JP)
(74) Representative: TBK

(56) References cited:
- EP-A2- 2 450 229
- DE-U1-202012 005 666
- DE-U1-202015 001 912
- JP-A- 2005 203 282

## Description

### TECHNICAL FIELD

This invention relates to a seating sensor according to the preamble of claim 1.

### BACKGROUND DISCUSSION

As a seating sensor, for example, the seating sensor disclosed in CN 203331881 U (see Fig. 3 thereof) has been known in the related art. The seating sensor includes a holder that is placed on a support member (S-shaped spring) disposed under a cushion member of a seat cushion of a vehicle to support the cushion member, and a sheet-shaped sensor body that is placed on the holder and detects information of a load applied from the cushion member. The sensor body is fixed to the holder by a pin-like rivet or clip that penetrates the sensor body in the thickness direction thereof.

In CN 203331881 U, since a substantially cylindrical rivet or clip only penetrates the sensor body, there is a possibility that the sensor body may come out of the rivet or clip and fall off from the holder.

Thus, a need exists for a seating sensor capable of suppressing a sensor body from falling off from a holder.

EP 2 450 229 A2 shows a seating, which comprises a seating sensor comprising: a holder including a first fall-off preventing portion and a first positioning portion, and being mountable on a seat cushion of a vehicle; and a sensor body mounted on the holder and including a second fall-off preventing portion engaged with the first fall-off preventing portion and configured to restrain fall-off of the sensor body from the holder in a predetermined fall-off preventing direction and a second positioning portion engaged with the first positioning portion and configured to restrain a positional deviation of the sensor body relative to the holder in a direction intersecting with the fall-off preventing direction, the sensor body being configured to detect information of a load applied to the seat cushion, wherein the first fall-off preventing portion is a base portion and a lid portion which are provided in parallel in the fall-off preventing direction, the second fall-off preventing portion is an interposing portion sandwiched between the base portion and the lid portion in the fall-off preventing direction, the first positioning portion is a positioning projection provided to protrude from any one of the base portion and the lid portion in the fall-off preventing direction, and the second positioning portion is a positioning recess which is formed through the interposing portion in the fall-off preventing direction to face the positioning projection and into which the positioning projection is inserted.

DE 20 2012 005 666 U1 shows a generic seating sensor according to the preamble of claim 1, which comprises a holder including a first fall-off preventing portion and a first positioning portion, and being mountable on a seat cushion of a vehicle, and a sensor body mounted on the holder and including a second fall-off preventing portion engaged with the first fall-off preventing portion and configured to restrain fall-off of the sensor body from the holder in a predetermined fall-off preventing direction and a second positioning portion engaged with the first positioning portion and configured to restrain a positional deviation of the sensor body relative to the holder in a direction intersecting with the fall-off preventing direction, the sensor body being configured to detect information of a load applied to the seat cushion, wherein the first fall-off preventing portion is a base portion and a lid portion which are provided in parallel in the fall-off preventing direction, the second fall-off preventing portion is an interposing portion sandwiched between the base portion and the lid portion in the fall-off preventing direction, the first positioning portion is a positioning projection provided to protrude from any one of the base portion and the lid portion in the fall-off preventing direction, the second positioning portion is a positioning recess which is formed through the interposing portion in the fall-off preventing direction to face the positioning projection and into which the positioning projection is inserted, the other one of the base portion and the lid portion, which is not provided with the positioning projection, has a relief hole formed therein, into which a tip end portion of the positioning projection penetrating the positioning recess is inserted, the base portion is fixedly provided on the holder, and the seating sensor further comprises a fitting claw provided to protrude from one of the base portion and the lid portion, and a fitting receiving portion provided on the other one of the base portion and the lid portion and having a fitting hole formed therein so as to enable the fitting claw to be fitted thereto at a rotational position where the base portion and the lid portion are arranged in parallel in the fall-off preventing direction.

DE 20 2015 001 912 U1 shows a seating sensor configuration, which comprises a seating sensor comprising: a holder including a first fall-off preventing portion and a first positioning portion, and being mountable on a seat cushion of a vehicle; and a sensor body mounted on the holder and including a second fall-off preventing portion engaged with the first fall-off preventing portion and configured to restrain fall-off of the first fall-off preventing portion from the holder in a predetermined fall-off preventing direction and a second positioning portion engaged with the first positioning portion and configured to restrain a positional deviation of the first positioning portion relative to the holder in a direction intersecting with
the fall-off preventing direction, the sensor body being configured to detect information of a load applied to the seat cushion.

### SUMMARY OF THE INVENTION

It is the object of the invention to further develop a seating sensor according to the preamble of claim 1 such that its mountability is improved.

The object of the invention is achieved by a seating sensor having the features of claim 1.

Further advantageous developments of the invention are defined in the dependent claim 2.

A seating sensor according to an aspect of this invention includes: a holder including a first fall-off preventing portion and a first positioning portion, and being mountable on a seat cushion of a vehicle; and a sensor body mounted on the holder and including a second fall-off preventing portion engaged with the first fall-off preventing portion and configured to restrain fall-off of the sensor body from the holder in a predetermined fall-off preventing direction and a second positioning portion engaged with the first positioning portion and configured to restrain a positional deviation of the sensor body relative to the holder in a direction intersecting with the fall-off preventing direction, the sensor body being configured to detect information of a load applied to the seat cushion.

According to this configuration, engagement of the first fall-off preventing portion with the second fall-off preventing portion may suppress the sensor body from falling off from the holder in the fall-off preventing direction, and engagement of the first positioning portion with the second positioning portion may suppress the sensor body from being positionally deviated relative to the holder in a direction intersecting with the fall-off preventing direction.

It is preferable that the seating sensor includes a plurality of sets, each of which is formed by the first positioning portion and the second positioning portion.

According to this preferred configuration, a plurality of pairs of the first positioning portion and the second positioning portion restrain the positional deviation of the sensor body relative to the holder so that, for example, the rotation of the sensor body relative to the holder around one set of the first positioning portion and the second positioning portion may be restrained.

In the seating sensor according to the present invention, the first fall-off preventing portion is a base portion and a lid portion which are provided in parallel in the fall-off preventing direction, and the second fall-off preventing portion is an interposing portion sandwiched between the base portion and the lid portion in the fall-off preventing direction.

Accordingly, the sensor body may be suppressed from falling off from the holder with a very simple structure in which the interposing portion is sandwiched between the base portion and the lid portion.

In the seating sensor according to the present invention, the first positioning portion is a positioning projection provided to protrude from any one of the base portion and the lid portion in the fall-off preventing direction, and the second positioning portion is a positioning recess which is formed through the interposing portion in the fall-off preventing direction to face the positioning projection and into which the positioning projection is inserted.

Accordingly, the sensor body may be suppressed from being positionally deviated relative to the holder with a very simple structure in which the positioning projection is inserted into the positioning recess.

In the seating sensor according to the present invention, the base portion is fixedly provided on the holder, the lid portion is rotatably connected to the base portion via a flexible portion, and the seating sensor includes a fitting claw provided to protrude from one of the base portion and the lid portion, and a fitting receiving portion provided on the other one of the base portion and the lid portion and having a fitting hole formed therein so as to enable the fitting claw to be fitted thereto at a rotational position where the base portion and the lid portion are arranged in parallel in the fall-off preventing direction.

Accordingly, when the sensor body is assembled to the holder, the sensor body is positioned relative to the holder by engaging the first positioning portion with the second positioning portion at the rotational position where the lid portion is detached from the base portion in the fall-off preventing direction. Then, by rotating the lid portion around the flexible portion up to the rotational position where the base portion and the lid portion are arranged in parallel in the fall-off preventing direction so as to fit the fitting claw into the fitting hole, the lid portion is fixed at the corresponding rotational position so that the interposing portion is sandwiched between the lid portion and the base portion.

As a result, the sensor body is suppressed from falling off from the holder in the fall-off preventing direction. In this manner, the assembly of the sensor body to the holder may be further facilitated.

In the seating sensor according to the present invention, the other one of the base portion and the lid portion, which is not provided with the positioning projection, has a relief hole formed therein, into which a tip end portion of the positioning projection penetrating the positioning recess is inserted.

Accordingly, when the interposing portion is sandwiched between the base portion and the lid portion by rotating the lid portion around the flexible portion up to the rotational position in which the base portion and the lid portion are arranged in parallel in the fall-off preventing direction, the tip end portion of the positioning projection penetrating the positioning recess may be inserted into the relief hole while the base portion or the lid portion may be brought into close contact with the interposing portion. As a result, the sensor body may be suppressed from being positionally deviated relative to the holder in the fall-off preventing direction.

In the seating sensor according to the present invention, the base portion and the lid portion are integrally provided in the holder.

Accordingly, an increase in the number of components may be suppressed since the base portion and the lid portion are integrally provided in the holder.

This invention is effective in suppressing a sensor body from falling off from a holder.

### BRIEF DESCRIPTION OF THE DRAWINGS

The foregoing, additional features, effects and advantages of this invention will become more apparent from the following detailed description considered with the reference to the accompanying drawings, wherein:
Fig. 1 is a vertical sectional view illustrating the structure of an exemplary embodiment of a seating sensor;
Fig. 2 is a perspective view illustrating the structure of the seating sensor according to the exemplary embodiment;
Figs. 3A and 3B are perspective views illustrating the operation of the seating sensor according to the exemplary embodiment; and
Fig. 4 is a perspective view illustrating the structure of a modification of a seating sensor.

### DETAILED DESCRIPTION

An exemplary embodiment of a seating sensor will be described below. Further, the forward and rearward direction of a vehicle will be referred to as a "longitudinal direction."

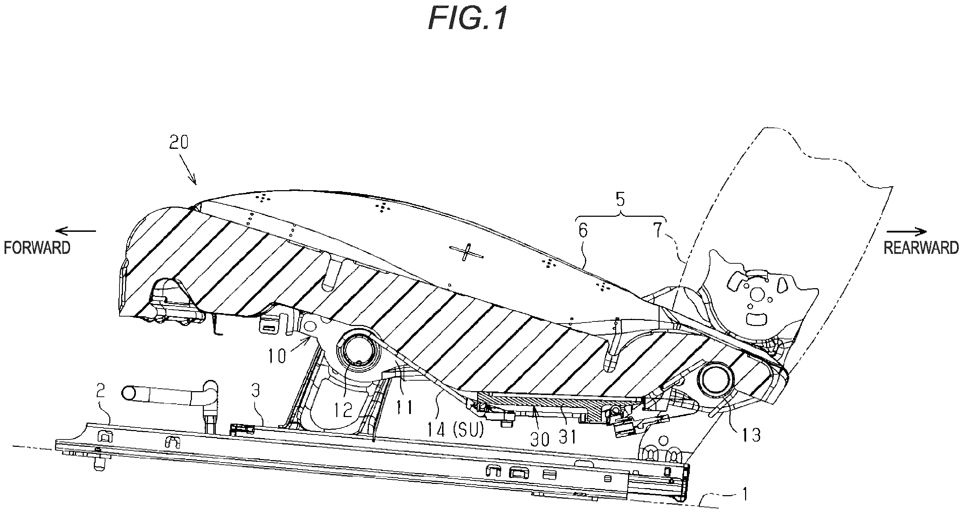

As illustrated in Fig. 1, a lower rail 2 is fixed to a floor 1 of the vehicle in a state of extending in the longitudinal direction and an upper rail 3 is connected to the lower rail 2 to be movable in the longitudinal direction with respect to the lower rail 2.

In addition, both the lower rails 2 and the upper rails 3 are arranged in pairs in the width direction (the direction orthogonal to the plane of the sheet of Fig. 1). FIG. 1 illustrates the pair arranged on the right side in the state of facing the front direction. Further, a seat 5 is fixed to and supported on the opposite upper rails 3 to form a seating portion for an occupant.

The seat 5 includes a seat cushion 6 that forms a seating surface and a seat back 7 that is tiltably (pivotally) supported at the rear end portion of the sheet cushion 6. In addition, the seat cushion 6 includes a cushion frame 10 that forms the frame of the seat cushion 6 and a cushion member 20 that covers the cushion frame 10. The cushion frame 10 includes a pair of cushion side frames 11 that are arranged side by side in the width direction to be placed on the opposite upper rails 3 in the width direction and made of, for example, a metal plate. Further, the cushion frame 10 includes a substantially cylindrical front connection rod 12 that extends in the width direction and connects the front portions of the opposite cushion side frames 11 to each other, and a substantially cylindrical rear connection rod 13 that extends in the width direction and connects the rear portions of the opposite cushion side frames 11 to each other. A plurality of S-shaped springs 14 basically extending in the longitudinal direction are suspended between the front connection rod 12 and the rear connection rod 13 in a state of being spaced apart from each other in the width direction. The plurality of S-shaped springs 14 constitute a support member SU.

The cushion member 20 is supported by the support member SU in a state of covering the entire cushion frame 10 from above.

A seating sensor 30 is mounted (mountable) on the support member SU. The seating sensor 30 includes a holder 31 mounted on the support member SU in a state of being sandwiched between the cushion member 20 and the support member SU.

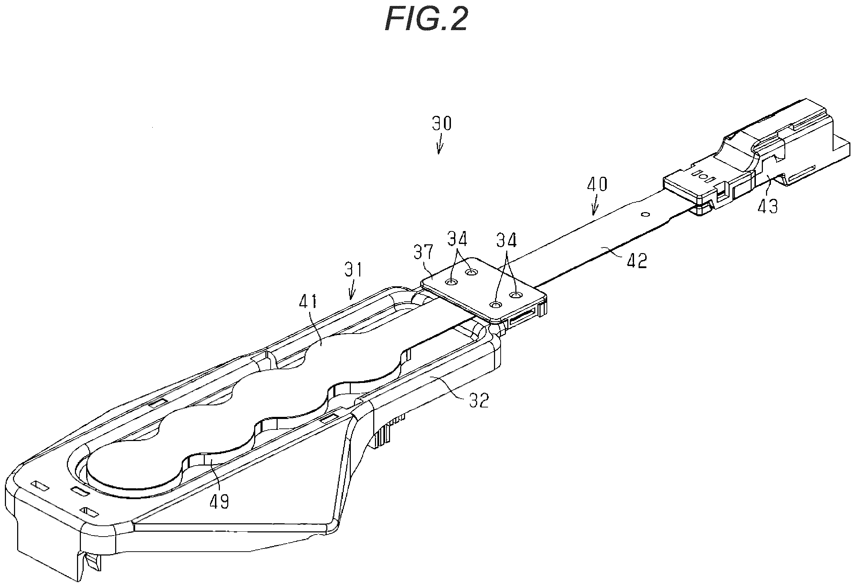

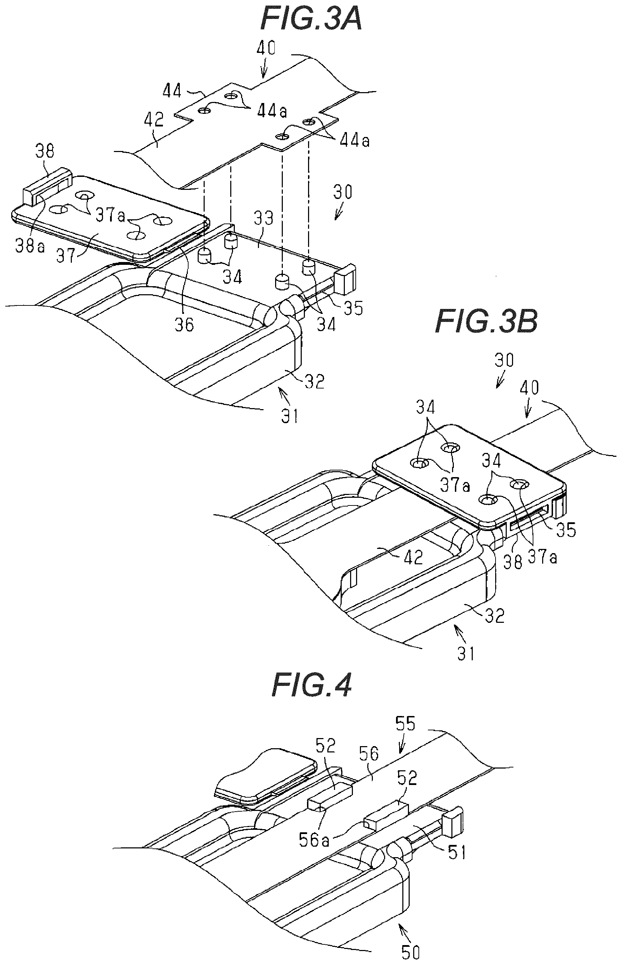

As illustrated in Figs. 2, 3A, and 3B, the holder 31 is provided with a substantially rectangular dish-shaped pedestal portion 32 extending in the longitudinal direction. The holder 31 is also provided with a substantially rectangular plate-shaped base portion 33 that protrudes rearward from the rear end of the pedestal portion 32. The dimension in the width direction of the base portion 33 is set to be equal to the width of an opening in the pedestal portion 32 in the width direction. Further, the upper surface of the base portion 33 is widened rearward in a state where the upper surface of the base portion is connected to an opening end surface of the pedestal portion 32 to be substantially flush with the opening end surface. In addition, the holder 31 is provided with positioning projections 34 having a substantially columnar shape as a pair of front and rear first positioning portions that protrude upward (fall-off preventing direction) on each of both widthwise edges of the base portion 33.

A substantially triangular fitting claw 35 protrudes at an intermediate portion in the longitudinal direction of an end face on one side (the right side in the figure) in the width direction of the base portion 33. Further, a substantially rectangular plate-shaped lid portion 37 is connected to an end face of the other side (the left side in the figure) in the width direction of the base portion 33 via a thin flexible portion 36 that forms a hinge. The dimension in the width direction of the lid portion 37 is set to be equal to the dimension in the width direction of the base portion 33 including the fitting claw 35, and the dimension in the longitudinal direction of the lid portion 37 is set to be equal to the dimension in the longitudinal direction of the base portion 33. Also, a pair of front and rear relief holes 37a having a substantially circular shape are formed through the opposite widthwise edges of the lid portion 37. The inner diameter of each of the relief holes 37a is set to be slightly larger than the diameter of each of the positioning projections 34. When the lid portion 37 is rotated about the flexible portion 36 until the lid portion 37 is positioned above the base portion 33, the relief holes 37a respectively face the positioning projections 34 and the positioning projections 34 respectively penetrate the relief holes 37a in the vertical direction (fall-off preventing direction). Further, a substantially door-shaped fitting receiving portion 38 is formed to protrude from an intermediate portion in the longitudinal direction of the edge on the side that is located away from the flexible portion 36 of the lid portion 37. In the fitting receiving portion 38, a fitting hole 38a is formed to penetrate the fitting receiving portion 38 in the width direction to face the fitting claw 35 when the lid portion 37 is rotated around the flexible portion 36 to be positioned above the base portion 33.

Thus, when the lid portion 37 is rotated around the flexible portion 36 until the lid portion is positioned above the base portion 33, the positioning projections 34 are respectively loosely fitted into the relief holes 37a and the fitting receiving portion 38 is elastically deformed so that the fitting receiving portion 38 rides over the fitting claw 35 and the fitting claw 35 is fitted into the fitting hole 38a (so-called snap fit). Thus, the lid portion 37 is arranged above the base portion 33 (in the fall-off preventing direction) in parallel to the base portion 33 in a state of being fixed to the base portion 33. The base portion 33 and the lid portion 37 constitute a first fall-off preventing portion.

A sensor body 40 that extends in the longitudinal direction along the pedestal portion 32 is placed on the holder 31. The sensor body 40 is configured with a membrane switch obtained by laminating, via an insulating spacer (e.g., a polyester film), a pair of contact sheets, each of which is obtained by printing a conductive ink (e.g., silver paste or carbon paste) on an insulating film (e.g., a polyester film).

A detection unit 41 in a shape of substantially continuous multi-circles is provided in the sensor body 40 to extend in the longitudinal direction in the pedestal portion 32. The sensor body 40 detects information of a load applied from the cushion member 20 by the detection unit 41. At this time, the pedestal portion 32 functions as a pressure receiving surface of the load. Further, the sensor body 40 is provided with a substantially band-shaped connection portion 42 that is connected to the rear end of the detection unit 41 and extends rearward. For example, a connector 43 to be connected to, for example, a control device, is provided at the tip end of the side that is located away from the detection unit 41 of the connection portion 42.

In addition, the sensor body 40 is provided with an interposing portion 44 serving as a second fall-off preventing portion. The interposing portion 44 is formed by widening the width of the connection portion 42 at a position in the longitudinal direction on the base portion 33. The dimensions in the width direction and the longitudinal direction of the interposing portion 44 are set to be equal to the dimensions in the width direction and the longitudinal direction of the base portion 33, respectively. Further, in each of the opposite side edges of the interposing portion 44 in the width direction, substantially circular positioning recesses 44a serving as a pair of front and rear second positioning portions are formed to penetrate therethrough. Each of the positioning recesses 44a is formed to penetrate in the vertical direction (fall-off preventing direction) to face each of the positioning projections 34, and the diameter of the positioning recesses 44a is set to be equal to the diameter of the positioning projections 34.

In the sensor body 40, since the interposing portion 44 is sandwiched between the base portion 33 and the lid portion 37 arranged in parallel in the vertical direction, fall-off of the sensor body 40 from the holder 31 in the corresponding direction is restrained. In this case, the positional deviation of the sensor body 40 relative to the holder 31 in an arbitrary direction (a direction intersecting with the fall-off preventing direction) along the base portion 33 is restrained by inserting (fitting) the positioning projections 34 into the positioning recesses 44a.

Further, a cushion member 49 made of, for example, an elastic material is interposed between the pedestal portion 32 and the detection portion 41 so as to form a shape of substantially continuous multi-circles in conformity with the detection portion 41. The thickness of the cushion member 49 is set to be equal to the depth of the pedestal portion 32.

Next, the action of the exemplary embodiment disclosed here and the effect thereof will be described.

(1) In the exemplary embodiment, the engagement of the base portion 33 and the lid portion 37 with the interposing portion 44 may suppress the sensor body 40 from falling off from the holder 31 in the vertical direction (fall-off preventing direction), and the engagement of the positioning projections 34 with the positioning recesses 44a may suppress the sensor body 40 from being positionally deviated relative to the holder 31 in a direction intersecting with the vertical direction (fall-off preventing direction). Further, for example, the initial positional deviation during the assembly of the sensor body 40 to the holder 31 may be suppressed. The positional deviation and fall-off of the sensor body 40 from the holder 31 may also be suppressed when a tensile force is applied to the sensor body 40.

(2) In the exemplary embodiment, since a plurality of sets of positioning projections 34 and positioning recesses 44a restrain the positional deviation of the sensor body 40 relative to the holder 31, for example, the rotation of the sensor body 40 relative to the holder 31 around one set of positioning projection 34 and positioning recess 44a may be restrained.

(3) In the exemplary embodiment, the sensor body 40 may be suppressed from falling off from the holder 31 with a very simple structure in which the interposing portion 44 is sandwiched between the base portion 33 and the lid portion 37.

(4) In the exemplary embodiment, the sensor body 40 may be suppressed from being positionally deviated relative to the holder 31 with a very simple structure in which the positioning projections 34 is inserted into the positioning recesses 44a.

(5) In the exemplary embodiment, when assembling the sensor body 40 to the holder 31, the sensor body 40 is positioned relative to the holder 31 by engaging the positioning projections 34 with the positioning recesses 44a at a rotational position where the lid portion 37 is detached from the base portion 33 in the vertical direction (fall-off preventing direction), as illustrated in Fig. 3A. Then, as illustrated in Fig. 3B, the lid portion 37 is rotated around the flexible portion 36 up to a rotational position where the base portion 33 and the lid portion 37 are arranged in parallel in the vertical direction, and the fitting claw 35 is fitted into the fitting hole 38a, so that the lid portion 37 is fixed at the rotational position and the interposing portion 44 is sandwiched between the lid portion 37 and the base portion 33. As a result, the sensor body 40 is suppressed from falling off from the holder 31 in the vertical direction. In this manner, the assembly of the sensor body 40 to the holder 31 may be further facilitated.

(6) In the exemplary embodiment, the lid portion 37 is formed with relief holes 37a where the tip ends portion of the positioning projections 34 penetrating the positioning recesses 44a are inserted. Thus, when the interposing portion 44 is sandwiched between the base portion 33 and the lid portion 37 by rotating the lid portion 37 around the flexible portion 36 up to the rotational position where the base portion 33 and the lid portion 37 are arranged in parallel in the vertical direction (fall-off preventing direction), the tip end portions of the positioning projections 34 penetrating the positioning recesses 44a may be inserted into the relief holes 37a, while the lid portion 37 may be brought into close contact with the interposing portion 44. As a result, the sensor body 40 may be suppressed from being positionally deviated in the vertical direction relative to the holder 31.

(7) In the exemplary embodiment, the base portion 33 and the lid portion 37 are integrally provided in the holder 31 so that an increase in the number of components may be suppressed.

(8) In the exemplary embodiment, since the lid portion 37, which is on the movable side with respect to the pedestal portion 32 or the like, is arranged above the base portion 33, the possibility that the sensor body 40 may fall off from the holder 31 may be reduced, even when the lid portion 37 is detached from the base portion 33. Further, by inserting the positioning projections 34 protruding from the base portion 33 into the positioning recesses 44a in the interposing portion 44 from the underside, the possibility that the sensor body 40 may be positionally deviated relative to the holder 31 may be reduced, even when the lid portion 37 is detached from the base portion 33.

(9) In the exemplary embodiment, by fixing the sensor body 40 to the holder 31 only with the engagement relationship between the holder 31 and the sensor body 40, for example, other fixing components (a rivet, a clip, an adhesive, and the like) may be omitted, and the number of the components and the cost may be reduced.

(10) In the exemplary embodiment, since the sensor body 40 is a membrane switch formed in a film shape, it is possible to make the sensor body 40 thinner and to further improve drip-proof performance and dust-proof performance.

Further, the above-described exemplary embodiment may be modified as follows.

As illustrated in Fig. 4, substantially quadrangular prism-shaped positioning projections 52 serving as the first positioning portion may be provided to protrude upward (fall-off preventing direction) on each of the widthwise opposite edges of a base portion 51 of a holder 50 similar to the holder 31. Further, a pair of positioning recesses 56a, which are opposite each other and are cut out in a substantially quadrangular shape in the width direction to be matched with the opposite positioning projections 52, may be formed in the interposing portion 56 of a sensor body 55 similar to the sensor body 40. Even in this case, the sensor body 55 may be suppressed from being positionally deviated relative to the holder 50 with a very simple structure in which the positioning projections 52 are inserted into the positioning recesses 56a.

In the above-described exemplary embodiment, the cushion member 49 may be bonded to the upper surface of the pedestal portion 32 or may be bonded to the lower surface of the detection portion 41, for example, by an adhesive.

In the above-described exemplary embodiment, the cushion member 49 may be omitted.

In the above-described exemplary embodiment, the base portion 33 and the lid portion 37 are integrally provided and arranged in parallel in the vertical direction (fall-off preventing direction). That is, a connection portion that integrally connects the base portion 33 and the lid portion 37 to each other is provided as the flexible portion 36.

In the above-described exemplary embodiment, the positioning projections 34 and the relief holes 37a are provided in the base portion 33 and the lid portion 37, respectively, but the relationship therebetween may be reversed. That is, the relief holes and the positioning projections may be provided in the base portion 33 and the lid portion 37, respectively.

In the above-described exemplary embodiment, the fitting claw 35 and the fitting receiving portion 38 are provided in the base portion 33 and the lid portion 37, respectively, but the relationship therebetween may be reversed. That is, the fitting receiving portion and the fitting claw may be provided in the base portion 33 and the lid portion 37, respectively.

In the above-described exemplary embodiment, the interposing portion 44 obtained by widening the width of the connection portion 42 is adopted, but, for example, the interposing portion in which the width dimension of the connection portion 42 is maintained may be adopted.

In the above-described exemplary embodiment, the positioning projections may have a polygonal pillar shape or a pyramidal shape. In this case, positioning recesses may be formed to correspond to the shape of the positioning projections.

In the above-described exemplary embodiment, the number of pairs of positioning projections 34 and positioning recesses 44a to be inserted is arbitrary. However, it may be more desirable to provide a plurality of sets of positioning projections 34 and positioning recesses 44a. Further, the relief holes 37a may be formed in the lid portion 37 in the number corresponding to the number of sets of positioning projections 34 and positioning recesses 44a.

In the above-described exemplary embodiment, the fall-off preventing direction is made to coincide with the vertical direction, but may be any other direction.

The seating sensor may be a seating sensor mounted on the upper portion of the cushion member 30.

The technical concept that may be understood from the above-described exemplary embodiment and the other examples will be added below.

In the above-described seating sensor, the sensor body is a membrane switch formed in a film shape.

According to this configuration, since the sensor body is a membrane switch formed in a film shape, it is possible to make the sensor body thinner and to further improve drip-proof performance and dust-proof performance.

The principles, preferred embodiment and mode of operation of the present invention have been described in the foregoing specification; however, the invention which is intended to be protected is not to be construed as limited to the particular embodiments disclosed, i.e. all such variations, changes and equivalents which fall under the scope of the present invention as defined in the appended claims are embraced thereby.

## Claims

1. A seating sensor (30) comprising:
a holder (31, 50) including a first fall-off preventing portion (33, 51) and a first positioning portion (34, 52), and being mountable on a seat cushion (6) of a vehicle; and
a sensor body (40, 55) mounted on the holder (31, 50) and including a second fall-off preventing portion (44, 56) engaged with the first fall-off preventing portion (33, 51) and configured to restrain fall-off of the sensor body (40, 55) from the holder (31, 50) in a predetermined fall-off preventing direction and a second positioning portion (44a, 56a) engaged with the first positioning portion (34, 52) and configured to restrain a positional deviation of the sensor body (40, 55) relative to the holder (31, 50) in a direction intersecting with the fall-off preventing direction, the sensor body (40, 55) being configured to detect information of a load applied to the seat cushion (6), wherein
the first fall-off preventing portion (33, 51) is a base portion (33) and a lid portion (37) which are provided in parallel in the fall-off preventing direction,
the second fall-off preventing portion (44, 56) is an interposing portion (44) sandwiched between the base portion (33) and the lid portion (37) in the fall-off preventing direction,
the first positioning portion (34, 52) is a positioning projection (34) provided to protrude from any one of the base portion (33) and the lid portion (37) in the fall-off preventing direction,
the second positioning portion (44a, 56a) is a positioning recess (44a) which is formed through the interposing portion (44) in the fall-off preventing direction to face the positioning projection (34) and into which the positioning projection (34) is inserted,
the other one of the base portion (33) and the lid portion (37), which is not provided with the positioning projection (34), has a relief hole (37a) formed therein, into which a tip end portion of the positioning projection (34) penetrating the positioning recess (44a) is inserted,
the base portion (33) is fixedly provided on the holder (31, 50), and
the seating sensor (30) further comprises
a fitting claw (35) provided to protrude from one of the base portion (33) and the lid portion (37), and
a fitting receiving portion (38) provided on the other one of the base portion (33) and the lid portion (37) and having a fitting hole (38a) formed therein so as to enable the fitting claw (35) to be fitted thereto at a rotational position where the base portion (33) and the lid portion (37) are arranged in parallel in the fall-off preventing direction,
**characterized in that**
the lid portion (37) is rotatably connected to the base portion (33) via a flexible portion (36),
the base portion (33) and the lid portion (37) are integrally provided in the holder (31, 50).

2. The seating sensor (30) according to claim 1, comprising:
a plurality of sets, each of which is formed by the first positioning portion (34, 52) and the second positioning portion (44a, 56a).

## Patentansprüche

1. Sitzsensor (30), der Folgendes aufweist:
eine Halterung (31, 50), die einen ersten Herunterfallverhinderungsabschnitt (33, 51) und einen ersten Positionierungsabschnitt (34, 52) aufweist und an einem Sitzkissen (6) eines Fahrzeugs montierbar ist; und
einen Sensorkörper (40, 55), der an der Halterung (31, 50) montiert ist und einen zweiten Herunterfallverhinderungsabschnitt (44, 56), der mit dem ersten Herunterfallverhinderungsabschnitt (33, 51) in Eingriff ist und gestaltet ist, um ein Herunterfallen des Sensorkörpers (40, 55) von der Halterung (31, 50) in einer vorbestimmten Herunterfallverhinderungsrichtung zu vermeiden, und einen zweiten Positionierungsabschnitt (44a, 56a) aufweist, der mit dem ersten Positionierungsabschnitt (34, 52) in Eingriff ist und gestaltet ist, um eine Positionsabweichung des Sensorkörpers (40, 55) relativ zu der Halterung (31, 50) in einer Richtung, die die Herunterfallverhinderungsrichtung schneidet, zu vermeiden, wobei der Sensorkörper (40, 55) gestaltet ist, um eine Information einer Last, die auf das Sitzkissen (6) aufgebracht wird, zu erfassen, wobei
der erste Herunterfallverhinderungsabschnitt (33, 51) ein Basisabschnitt (33) und ein Deckelabschnitt (37) ist, die parallel in der Herunterfallverhinderungsrichtung vorgesehen sind,
der zweite Herunterfallverhinderungsabschnitt (44, 56) ein Zwischenabschnitt (44) ist, der zwischen dem Basisabschnitt (33) und dem Deckelabschnitt (37) in der Herunterfallverhinderungsrichtung angeordnet ist,
der erste Positionierungsabschnitt (34, 52) ein Positionierungsvorsprung (34) ist, der vorgesehen ist, um von einem beliebigen von dem Basisabschnitt (33) und dem Deckelabschnitt (37) in der Herunterfallverhinderungsrichtung vorzustehen,
der zweite Positionierungsabschnitt (44a, 56a) eine Positionierungsaussparung (44a) ist, die durch den Zwischenabschnitt (44) in der Herunterfallverhinderungsrichtung ausgebildet ist, um zu dem Positionierungsvorsprung (34) zugewandt zu sein, und in die der Positionierungsvorsprung (34) eingesetzt ist,
der andere von dem Basisabschnitt (33) und dem Deckelabschnitt (37), der mit dem Positionierungsvorsprung (34) nicht vorgesehen ist, ein Entlastungsloch (37a) hat, das darin ausgebildet ist, in das ein vorderer Endabschnitt des Positionierungsvorsprungs (34), der die Positionierungsaussparung (44a) durchbringt, eingesetzt ist,
der Basisabschnitt (33) fest an der Halterung (31, 50) vorgesehen ist, und
der Sitzsensor (30) des Weiteren Folgendes aufweist:
eine Einpassklaue (35), die vorgesehen ist, um von einem von dem Basisabschnitt (33) und dem Deckelabschnitt (37) vorzustehen, und
einen Einpassaufnahmeabschnitt (38), der an dem anderen von dem Basisabschnitt (33) und dem Deckelabschnitt (37) vorgesehen ist und ein Einpassloch (38a) hat, das darin ausgebildet ist, um es zu ermöglichen, dass die Einpassklaue (35) an einer Drehposition, an der der Basisabschnitt (33) und der Deckelabschnitt (37) parallel in der Herunterfallverhinderungsrichtung angeordnet sind, daran eingepasst zu sein,
**dadurch gekennzeichnet, dass**
der Deckelabschnitt (37) drehbar mit dem Basisabschnitt (33) über einen flexiblen Abschnitt (36) verbunden ist,
der Basisabschnitt (33) und der Deckelabschnitt (37) einstückig in der Halterung (31, 50) vorgesehen sind.

2. Sitzsensor (30) nach Anspruch 1, der Folgendes aufweist:
eine Vielzahl von Gruppen, die jeweils durch den ersten Positionierungsabschnitt (34, 52) und den zweiten Positionierungsabschnitt (44a, 56a) ausgebildet sind.

## Revendications

1. Capteur de siège (30) comprenant :
un support (31, 50) comprenant une première partie de prévention de chute (33, 51) et une première partie de positionnement (34, 52) et pouvant être monté sur un coussin de siège (6) d'un véhicule ; et
un corps de capteur (40, 55) monté sur le support (31, 50) et comprenant une seconde partie de prévention de chute (44, 56) mis en prise avec la première partie de prévention de chute (33, 51) et configuré pour empêcher la chute du corps de capteur (40, 55) du support (31, 50) dans une direction de prévention de chute prédéterminée et une seconde partie de positionnement (44a, 56a) mise en prise avec la première partie de positionnement (34, 52) et configurée pour empêcher une déviation de position du corps de capteur (40, 55) par rapport au support (31, 50) dans une direction coupant la direction de prévention de chute, le corps de capteur (40, 55) étant configuré pour détecter l'information d'une charge appliquée sur le coussin de siège (6), dans lequel :
la première partie de prévention de chute (33, 51) est une partie de base (33) et une partie de couvercle (37) qui sont disposées en parallèle dans la direction de prévention de chute,
la seconde partie de prévention de chute (44, 56) est une partie d'interposition (44) prise en sandwich entre la partie de base (33) et la partie de couvercle (37) dans la direction de prévention de chute,
la première partie de positionnement (34, 52) est une saillie de positionnement (34) prévue pour faire saillie depuis l'une quelconque parmi la partie de base (33) et la partie de couvercle (37) dans la direction de prévention de chute,
la seconde partie de positionnement (44a, 56a) est un évidement de positionnement (44a) qui est formé à travers la partie d'interposition (44) dans la direction de prévention de chute pour faire face à la saillie de positionnement (34) et dans lequel la saillie de positionnement (34) est insérée,
l'autre parmi la partie de base (33) et la partie de couvercle (37), qui n'est pas prévue avec la saillie de positionnement (34), a un trou en relief (37a) formé à l'intérieur de cette dernière, dans lequel une partie d'extrémité de pointe de la saillie de positionnement (34) pénétrant dans l'évidement de positionnement (44a) est insérée,
la partie de base (33) est prévue, de manière fixe, sur le support (31, 50), et
le capteur de siège (30) comprend en outre :
une griffe de raccord (35) prévue pour faire saillie de l'une parmi la partie de base (33) et la partie de couvercle (37), et
une partie de réception de raccord (38) prévue sur l'autre parmi la partie de base (33) et la partie de couvercle (37) et ayant un trou de raccord (38a) formé à l'intérieur de cette dernière afin de permettre à la griffe de raccord (35) d'être ajustée par rapport à cette dernière dans une position de rotation dans laquelle la partie de base (33) et la partie de couvercle (37) sont agencées en parallèle dans la direction de prévention de chute,
**caractérisé en ce que** :
la partie de couvercle (37) est raccordée, en rotation, à la partie de base (33) via une partie flexible (36),
la partie de base (33) et la partie de couvercle (37) sont prévues de manière solidaire dans le support (31, 50).

2. Capteur de siège (30) selon la revendication 1, comprenant :
une pluralité d'ensembles, dont chacun est formé par la première partie de positionnement (34, 52) et la seconde partie de positionnement (44a, 56a).
